**Europäisches Patentamt**

**European Patent Office**

**Office européen des brevets**

(11) Veröffentlichungsnummer: **0 122 910**
**A1**

## (12) EUROPÄISCHE PATENTANMELDUNG

(21) Anmeldenummer: **84890063.5**

(22) Anmeldetag: **02.04.84**

(51) Int. Cl.³: **C 21 C 5/52**
**C 21 C 5/46, H 05 B 7/08**

(30) Priorität: **06.04.83 AT 1209/83**

(43) Veröffentlichungstag der Anmeldung:
**24.10.84 Patentblatt 84/43**

(84) Benannte Vertragsstaaten:
**BE CH DE FR GB IT LI LU NL SE**

(71) Anmelder: **VOEST-ALPINE Aktiengesellschaft**
**Muldenstrasse 5**
**A-4020 Linz(AT)**

(72) Erfinder:
**Der Erfinder hat auf seine Nennung verzichtet**

(74) Vertreter: **Wolfram, Gustav, Dipl.-Ing.**
**Schwindgasse 7 P.O. Box 205**
**A-1041 Wien(AT)**

(54) **Verfahren zum Betrieb einer metallurgischen Anlage.**

(57) Bei diesem Verfahren umfaßt die Anlage ein metallurgisches Gefäß) wie einen Schmelzofen oder Konverter, durch dessen Decke eine oder mehrere Hohlelektrode(n) (3a, 3b, 3c) geführt ist (sind), in deren Hohlraum ein Zuführungsrohr (4) heb- und senkbar beweglich ist.

Um das Erschmelzen bzw. die metallurgische Behandlung von verschiedensten Stahlqualitäten aus Schrott sowie von direkt reduziertem Eisenschwamm in einem einzigen metallurgischen Gefäß betriebssicher und mit geringstmöglichem Energie- und Zeitaufwand zu ermöglichen, ist vorgesehen, daß wahlweise.

a) durch Zurückziehen der Rohrmündung hinter die Mündung der Hohlelektrode (3a, 3b, 3c) die Anlage als Lichtbogenofen zum Einschmelzen von Einsatz- bzw. Zuschlagstoffen betrieben wird;

b) durch Verschieben der Mündung des Rohres (4a, 4b, 4c) bis zur oder geringfügig vor die Mündung der Hohlelektrode (3a, 3b, 3c) und gleichzeitiges Zuführen eines plasmaerzeugenden Gases die Anlage als Plasmaofen zum Schmelzen von Einsatz- oder Zuschlagstoffen unter erhöhter Energieeintragung betrieben wird, oder

c) durch Verschieben der Mündung des Rohres (4a, 4b, 4c) über die Mündung der Hohlelektrode (3a, 3b, 3c) hinaus, gegebenenfalls bis zum Eintauchen in ein Bad (2) der niedergeschmolzenen Einsatzstoffe und Zufuhr von sauerstoffhältigem Gas bei unterbrochener Stromzufuhr die Anlage als Frischkonverter betrieben wird.

FIG.1

Verfahren zum Betrieb einer metallurgischen Anlage

Die Erfindung betrifft ein Verfahren zum Betrieb einer metallurgischen Anlage mit einem metallurgischen Gefäß, wie einem Schmelzofen oder Konverter, durch dessen Decke eine oder mehrere Hohlelektrode(n) geführt ist (sind), in deren Hohlraum ein Zuführungsrohr heb- und senkbar beweglich ist.

Zur Gewinnung von flüssigem Eisen durch Reduktion von Eisenoxiderz wurde in der AT-PS 232 020 vorgeschlagen, ein geschlossenes, mit einer feuerfesten Auskleidung versehenes Gefäß mit einer oder mehreren durch die Decke des Gefäßes ragenden Söderberg- oder Graphitelektroden zur Erzeugung eines elektrischen Lichtbogens, einer Anzahl von mit den Einfallöffnungen des Gefäßes gasdicht verbundenen Einführungsschächten für das reduzierte Material und mit einer der Anzahl der Einführungsschächte entsprechenden Anzahl von mit einer feuerfesten Auskleidung versehenen Reduktionstürmen zu verwenden. Aus dieser AT-PS ist auch bekannt, eine oder mehrere durchbohrte Elektroden vorzusehen und durch die Bohrung eine heb- und senkbare Zuführungseinrichtung aus konzentrischen Rohren zur Förderung von Brennstoff, sauerstoffhältigem Gas und Wasserdampf einzusetzen. Nach der AT-PS wird ein Gas mit auf Eisen nicht oxidierend wirkenden Eigenschaften erzeugt, welches direkt den Reduktionstürmen zugeführt wird.

Beim Einschmelzen von niedrig- und unlegiertem Schrott in einem Lichtbogenofen wird häufig Sauerstoff als zusätzliche Energiequelle eingebracht. Diese Zufuhr von Sauerstoff kam schon kurz nach Schmelzbeginn den Einschmelzprozeß wesentlich unterstützen, wenn der $O_2$-Strahl

in die Umgebung der Elektroden gerichtet ist. Dabei verbrennen vor allem der Kohlenstoff aus den Zuschlägen und Silizium sowie Kohlenstoff aus dem Schrott. Erst wenn sich ein Metallsumpf gebildet hat und der Schrott im Einflußbereich des Sauerstoffstrahles genügend erwärmt ist, kann sinnvoll mit dem Schrottbrennen begonnen werden.

Es gibt nun Fälle, bei denen der Einschmelzprozeß durch das Haupt- oder Hilfstor des Ofens über manuell bediente, selbstverzehrende Sauerstofflanzen mit geringem Abbrand oder durch Einsatz von zumindest drei in der Ofenwand zwischen den sogenannten "hot-spots" fest installierten oder durch Öffnungen im Ofendeckel geführten Öl-Sauerstoff-Brennern unterstützt wird. Mit diesen Maßnahmen sollen möglichst kurze Chargenzeiten erzielt werden, wobei die hohen Transformatorleistungen insbesondere von sogenannten UHP-(Ultra High Power-Öfen mit Anschlußwerten bis zu 160 MVA)-Öfen während nahezu der gesamten Einschaltzeit voll ausgenützt werden sollen.

Bei manueller Bedienung der Sauerstofflanzen ergibt sich starke Hitzebelastung und erhöhte Unfallgefahr für das Bedienungspersonal. Die Lage der Reaktionszone ist nicht genau definiert, wodurch ein unregelmäßiger Angriff der feuerfesten Ofenauskleidung erfolgen kann. Weiters ist nach der herkömmlichen Technologie die Möglichkeit einer Beschädigung der Elektroden nicht auszuschließen und schließlich ist die mögliche Anzahl der eingeführten Lanzen bzw. Brenner sehr begrenzt.

Die Erfindung stellt sich die Aufgabe, die geschilderten Nachteile und Schwierigkeiten beim Metallschmelzen zu überwinden und das Erschmelzen bzw. die metallurgische Behandlung von verschiedensten Stahlqualitäten aus Schrott sowie von direkt reduziertem Eisenschwamm in einem einzigen metallurgischen Gefäß betriebssicher und mit geringstmöglichem Energie- und Zeitaufwand zu ermöglichen.

Die gestellte Aufgabe wird bei einem Verfahren der eingangs erwähnten Art erfindungsgemäß dadurch gelöst, daß wahlweise

a) durch Zurückziehen der Rohrmündung hinter die Mündung der Hohlelektrode die Anlage als Lichtbogenofen zum Einschmelzen von Einsatz- bzw. Zuschlagstoffen betrieben wird;

b) durch Verschieben der Mündung des Rohres bis zur oder geringfügig vor die Mündung der Hohlelektrode und gleichzeitiges Zuführen eines plasmaerzeugenden Gases die Anlage als Plasmaofen zum Schmelzen von Einsatz--oder Zuschlagstoffen unter erhöhter Energieeintragung betrieben wird, oder

c) durch Verschieben der Mündung des Rohres über die Mündung der Hohlelektrode hinaus, gegebenenfalls bis zum Eintauchen in ein Bad der niedergeschmolzenen Einsatzstoffe und Zufuhr von sauerstoffhältigem Gas bei unterbrochener Stromzufuhr die Anlage als Frischkonverter betrieben wird.

In der Betriebsart als reiner Lichtbogenofen ist das Gaszuführungsrohr geschlossen und seine Mündung geringfügig - etwa 3 bis 5 cm - in die Hohlelektrode zurückgezogen, so daß letztere gleichzeitig als Schutzrohr für das Zuführungsrohr dient. Zwischen der Hohlelektrode und den Einsatz- oder Zuschlagstoffen bzw. dem Schmelzenbad wird ein Lichtbogen gezündet.

Beim Betrieb als Plasmaofen befindet sich die Mündung des Zuführungsrohres etwa in gleicher Höhe mit der Mündung der Hohlelektrode oder ragt um maximal etwa 2 cm aus letzterer heraus. Zwischen Hohlelektrode und den Einsatzstoffen bzw. der Schmelze brennt ein Lichtbogen, gleichzeitig wird über das Zuführungsrohr ein plasmaerzeugendes Gas, wie Helium, Argon und insbesondere Sauerstoff, zugeführt. Wird Sauerstoff eingeleitet, so dient dieser sowohl als Plasma- als auch als Reaktionsgas.

Die Forderung, daß die Mündung des Zuführungsrohres bei dieser Betriebsweise zumindest bis zur Mündung der Hohlelektrode reichen muß, ergibt sich daraus, daß z.B. Sauerstoff sonst an der Mündung der Hohlelektrode mit dem Elektrodenmaterial reagieren und deren Mündung ausbrennen würde. Daraus ergibt sich weiters die Forderung nach einem geringfügigen stetigen Vorschub des Zuführungsrohres, um dessen Abbrand an der Mündung zu kompensieren und um so ein Ausbrennen der Hohlelektrode zu vermeiden.

Infolge der hohen Temperatur des gebildeten Plasmas wird der direkt durch Strahlung auf den Einsatz bzw. auf die Schmelze übertragene Energieanteil größer, die Einschmelzzeiten werden dementsprechend kürzer und die Energienutzung wird verbessert, da weniger Wärme an die Ofenwände abgegeben wird. Ein Sumpf schmelzflüssiger Metalles bildet sich zunächst im Zentrum des Ofenraumes, so daß der peripher an der Ofenwand befindliche, noch nicht geschmolzene Teil des Einsatzes durch längere Zeit einen zusätzlichen Schutz der Ausmauerung bildet und durch die Strahlungshitze vorgewärmt wird, bis er in das Schmelzbad absinkt.

Wird die metallurgische Anlage zum Frischen verwendet, ragt die Mündung des Zuführungsrohres mindestens etwa 10 cm aus der Hohlelektrode heraus und während des Blasvorganges wird keine Lichtbogenentladung aufrecht erhalten. Sauerstoffhältiges Gas oder reiner Sauerstoff wird auf das Bad aufgeblasen oder in dieses eingeblasen.

Nach einer bevorzugten Ausführungsform des erfindungsgemäßen Verfahrens wird beim Betrieb als Frischkonverter technisch reines Sauerstoffgas durch die Zuführungsrohre unter die Oberfläche des Bades der niedergeschmolzenen Einsatzstoffe eingeblasen.

Der unvermeidliche Abbrand des Zuführungsrohres wird
durch laufendes Nachschieben des Rohres durch die Hohlelektrode kompensiert, wobei die Hohlelektrode gleichzeitig als Schutzrohr für den oberen Teil des Zuführungsrohres fungiert.

Zweckmäßig wird als Zuführungsrohr eine selbstverzehrende Lanze aus feuerfest ummanteltem Stahlrohr eingesetzt.
Lanzen dieser Art sind bekannt. Sie bestehen zumeist
aus unlegiertem Stahl. Die Ummantelung aus Feuerfestmaterial sollte nicht allzu dick sein, da ein dicker
Überzug nicht sehr widerstandsfähig gegen mechanische
Beanspruchung ist und leicht zerstört werden kann. Überdies weisen dick ummantelte Lanzen erhebliches Gewicht
auf und sind deswegen außerordentlich schwer handhabbar.
Besonders geeignet sind sogenannte "kalorisierte" Lanzen,
d.h. Rohre aus unlegiertem Stahl, welche in Aluminiumpulver auf etwa 1000°C erhitzt wurden. Bei dieser Behandlung diffundiert Aluminium unter Bildung einer
Oberflächenschicht aus einer Al-Fe-Legierung in den
Stahl. Bei hohen Temperaturen entsteht auf den kalorisierten Oberflächen ein dünner Film aus feuerfestem
Aluminiumoxid. Die Lanzen können vorzugsweise an ihrer
Innen- und Außenseite kalorisiert sein; ihre Standzeit
ist bei etwa gleichem Gewicht in Abhängigkeit von den
Einsatzbedingungen 3 bis 10 mal größer als jene von unbeschichteten selbstverzehrenden Lanzen. Eine Weiterentwicklung kalorisierter Lanzen mit zusätzlichen feuerfesten Überzügen ist in der US-PS 3,292,662 beschrieben.

Nach einer weiteren bevorzugten Ausführungsform werden
durch wenigstens ein Zuführungsrohr fallweise Kohlenstoffträger und/oder feinteilige Zuschlagstoffe eingebracht.

So kann beispielsweise bei Bedarf Kohlestaub mit einem
Fördergas eingeblasen werden.

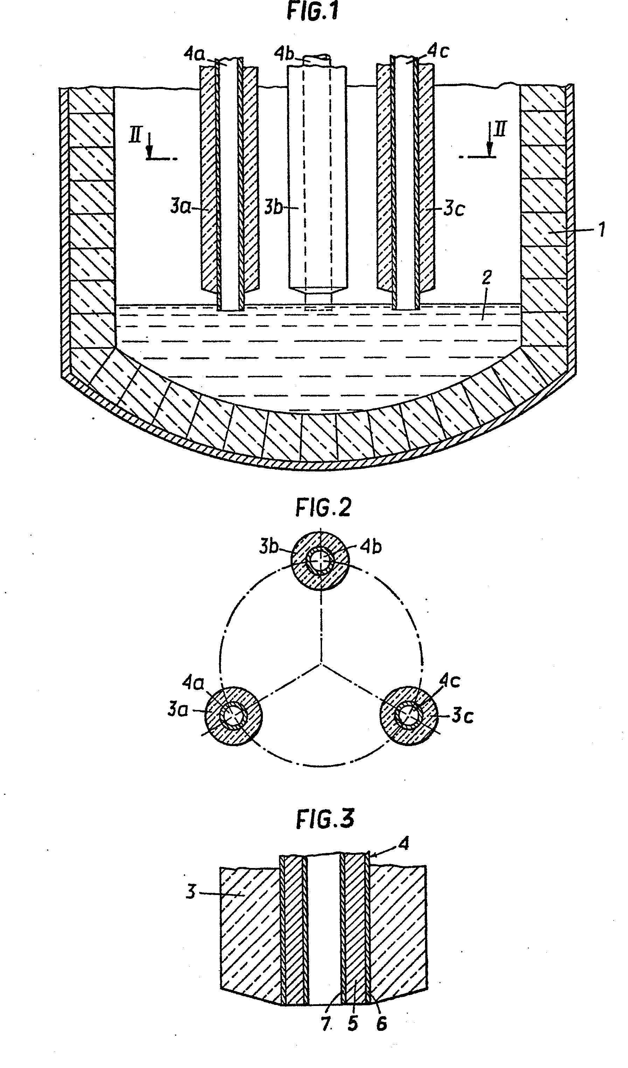

Die Erfindung ist in der Zeichnung anhand eines Ausführungsbeispieles mit drei Hohlelektroden näher erläutert. In Fig. 1 ist ein metallurgisches Gefäß mit
Hohlelektroden bei abgenommenem Deckel schematisch
im Schnitt dargestellt. Fig. 2 ist ein Schnitt durch
die Elektrodenanordnung entlang der Linie II-II der
Fig. 1. Fig. 3 zeigt einen vergrößerten Ausschnitt vom
Mündungsbereich einer Hohlelektrode, wobei sich das
darin verschiebbare Gaszuführungsrohr in zum Betrieb der
Anlage als Plasmaofen geeigneter Stellung befindet.

Die feuerfest ausgekleidete Wand des metallurgischen Gefäßes ist in Fig. 1 mit 1 bezeichnet. Oberhalb des
Spiegels des Bades 2 aus niedergeschmolzenen Einsatzstoffen befinden sich drei senkrecht angeordnete zylindrische Hohlelektroden 3a, 3b, 3c aus Kohlestampfmasse
oder Graphit, deren Achsen durch die Ecken eines gleichseitigen Dreieckes, auf dessen Ebene sie normal stehen,
verlaufen (Fig. 2).

Die Mündungen der in den Hohlelektroden heb- und senkbar beweglichen Gaszuführungsrohre 4a, 4b, 4c sind so
weit über die Mündung der Hohlelektroden verschoben dargestellt, daß sie bis unter die Oberfläche des Bades 2
ragen. In dieser Vorschubstellung der Zuführungsrohre
wird die Anlage als Frischkonverter betrieben, wobei
als Folge des gleichzeitigen Sauerstoffeinblasens an
drei definierten Punkten sehr gute Baddurchmischung erzielt wird. Ein ungleichmäßiger Angriff der Auskleidung
des metallurgischen Gefäßes ist ausgeschlossen, genauso eine Beschädigung der Elektroden. Die Hohlelektrode wirkt über eine bestimmte Länge der Zuführungsrohre als zusätzlicher Schutzmantel.

In Fig. 3 ist die Mündung eines allgemein mit 4 bezeichneten Zuführungsrohres gerade auf gleicher Höhe mit der Ausmündung der Hohlelektrode befindlich dargestellt. Das Zuführungsrohr besteht aus einem Kernrohr 5 aus unlegiertem Stahl, auf dessen äußerer und innerer Mantelfläche sich jeweils eine Schicht (6, 7) aus feuerfestem Material befindet.

Wird bei dieser Stellung des Zuführungsrohres ein geeignetes plasmabildendes Gas in den zwischen Hohlelektrode und Einsatzmaterial bzw. Schmelze brennenden Lichtbogen eingeblasen, kann die Einschmelz- bzw. Überhitzungszeit wesentlich verkürzt werden.

Infolge der geometrisch regelmäßigen Anordnung der Hohlelektroden mit den darin geführten Rohren erfolgt das Niederschmelzen des Einsatzes gleichmäßiger.

Die Zuführungsrohre sind in den Hohlelektroden zu jedem gewünschten Zeitpunkt axial verschiebbar, so daß diese bei Bedarf sofort beispielsweise mit Sauerstoff beaufschlagt werden können.

Beim Erschmelzen von unlegierten und niedriglegierten Stahlgüten unter Sauerstoffzufuhr muß dem eingesetzten Schrott wesentlich mehr Kohlenstoff als beim üblichen Einschmelzen zugesetzt werden. Durch Verbrennung des Kohlenstoffes entsteht zusätzliche Wärme. Dabei wird, zumindest örtlich, die Ofenatmosphäre oxidierend. Es ist daher auch aus diesem Grund erforderlich, um auf den für die Durchführung des Frischens notwendigen Einlaufkohlenstoffgehalt zu kommen, wesentlich mehr Kohle in gelöster oder ungelöster Form im Einsatz vorzulegen. Die Menge des benötigten zusätzlichen Kohlenstoffes läßt sich für den beabsichtigten Sauerstoffzusatz überschlägig berechnen. Diese zusätzlichen Mengen an Kohlenstoff werden in Form von Koks vor dem Einbringen des übrigen Einsatzes auf die Herdsohle gebracht. Durch wenigstens ein Zuführungsrohr können nach Bedarf Kohlenstoffträger - beispielsweise in Form von Kohlenstaub - direkt nachchargiert werden.

Das Einblasen von Sauerstoff hat zur Folge, daß mit Beginn des Einschmelzens bereits gleichzeitig teilweise die Frischvorgänge abzulaufen beginnen. Nach einer Schmelzzeit von etwa 10 bis 20 min sind im Bereich der Elektroden die notwendigen Temperaturen erreicht. Es kann nun gezielt mit dem Sauerstoffeinblasen gemäß Betriebsart b) des erfindungsgemäßen Verfahrens begonnen werden. Der Sauerstoff trifft auf den rotglühenden Schrott und verbrennt Eisen und - soweit darin enthalten - Kohlenstoff. Zusätzlich kommt es zur Bildung eines sehr heißen Plasmas.

Das entstehende Kohlenmonoxid wird nur zum Teil zu Kohlendioxid verbrannt. Das entstehende Eisen(II)-oxid wird teilweise zu Eisen(III)-oxid aufoxidiert und wieder durch Kohlenstoff und Eisen in dem im Herdbereich durch die Einschmelzwirkung der Elektroden entstandenen Sumpf reduziert. Auch das Eisen(II)-oxid wird durch den hohen Kohlenstoffüberschuß des auf dem Herd eingesetzten Kokses zum Teil wieder reduziert.

Mit forschreitendem Einschmelzen ist die Reduktion der Eisenoxide der Schlacke mit der Bildung einer stark bewegten schäumenden Schlacke verbunden, die als Kennzeichen einer guten Entphosphorung betrachtet werden kann. Das Schlackenvolumen ist gegenüber dem Volumen des Stahlbades wesentlich vergrößert und sorgt durch seine
Bewegung dafür, daß immer frische Schlackenmengen an
die Reaktionsfläche Schlacke/Metallbad gebracht werden.
Dieser Vorgang wird durch das Aufblasen von Sauerstoff
noch begünstigt.

Die bei der Verbrennung des Eisens und des Kohlenstoffs
freiwerdende Wärme wird größtenteils an den umliegenden
Einsatz abgegeben. Der noch vorhandene Sauerstoffüberschuß verbrennt das aus der Reaktion der Schmelzetröpfchen mit dem Koks stammende Kohlenmonoxid innerhalb
des Schrottes zumindest teilweise zu Kohlendioxid. Das
durch die Wirkung des Sauerstoffstrahles gegebene Ineinandergreifen von Schmelzwirkung, Frischwirkung und
Badbewegung ist für den metallurgischen Ablauf besonders wichtig. Der Betrieb der Anlage muß daher so gesteuert werden, daß der Beginn des Schmelzens nahezu
mit dem Beginn des Frischens zusammenfällt. Die ständig
auftretende Wechselwirkung von Oxidation und Reduktion
wirkt als ein kräftiges, von starker Badbewegung begleitetes Durcharbeiten des Einsatzes. Die Menge des herausgefrischten Kohlenstoffes kann als Maß für die Stärke
des Kochens gelten.

Voraussetzung für eine Vorverlegung der Entphosphorung
ist die frühzeitig herbeigeführte Reaktionsbereitschaft
der Schlacke, die flüssig sein und gelösten, freien
Kalk enthalten muß.

Bei Aufgabe einer ausreichenden Kalkmenge in den Einsatz
werden daher bei der teilweise erfolgenden Verbrennung
des Schrottes gleichzeitig die Voraussetzungen für eine
schnelle Entphosphorung erfüllt. Die Wärmeentwicklung
im Brennfleck des Sauerstoffstrahles erfolgt in unmittelbarer Nähe der Schlackenbildner. Nach der Bildung des
Schmelzsumpfes kommt dazu der rasche Wärmeübergang vom Metallbad an die Schlacke als Folge der starken Frischreaktion. Der Wirkungsgrad der frisch gebildeten Schlacke
steigt im Hinblick auf die Oxidationsfähigkeit für den
Phosphor umsomehr, je höher der Gehalt an Eisen(II)-oxid
und je niedriger die Temperatur ist.

Die Entkohlung hat in diesem Schmelzabschnitt nur Bedeutung hinsichtlich einer Verstärkung der Badbewegung
und um den Eisengehalt der Schlacke nicht zu sehr ansteigen zu lassen.

Nach Abziehen der Einschmelzschlacke ist auf die Höhe
des Phosphorgehaltes keine Rücksicht mehr zu nehmen,
d.h. die Entkohlungsreaktion kann sofort mittels gasförmigen Sauerstoffes eingeleitet und durchgeführt
werden.

Eine Vorverlegung der Entschwefelung in die Einschmelzzeit ist bei dem beschriebenen Ablauf der Vorgänge ebenfalls von Bedeutung. Für die Entschwefelung ist das
frühzeitige Angebot an freiem Kalk in der Schlacke und
damit für die Schwefelverteilung zwischen Bad und
Schlacke von großer Bedeutung.

Die Reaktionsbedingungen, unter denen die beiden Vorgänge, der Übergang des Schwefels von der Metallphase
in die Schlackenphase und die Entfernung des Schwefels
aus der Schlacke über die Gasphase ablaufen, sind gegenläufig. Der Übergang des Schwefels vom Metallbad in die
Schlacke wird begünstigt durch steigende Basizität und
sinkendes Oxidationspotential der Schlacke, durch steigende Temperaturen sowie durch Vergrößerung der Grenzfläche zwischen Metall- und Schlackenphase aufgrund
einer kräftigen Badbewegung.

Die Schlacken-Gasentschwefelung wird gefördert durch steigendes Oxidationspotential und sinkende Basizität
der Schlacke, durch steigende Temperatur und kräftige
Badbewegung.

Die Wirkung von Basizität und Oxidationspotential als
Haupteinflußgrößen ist ebenfalls eine gegenläufige. Die
Wirksamkeit des Sauerstoffstrahles ergibt sich aus
der Überlagerung dieser beiden Vorgänge.

Die Ofenatmosphäre ist beim üblichen Elektrostahlverfahren während der Einschmelzphase reduzierend. Diese
früher als wesentlicher Vorteil des Elektroofens betrachtete Tatsache hat als Folge der Ablösung der Diffusionsdesoxidation durch die Fällungsdesoxidation wesentlich an Bedeutung verloren. Beim Einschmelzen mit Sauerstoffunterstützung ist die Ofenatmosphäre, zumindest
örtlich, stark oxidierend. Trotzdem ist der Ausgangszustand der Schmelze nach dem Einschmelzen des Schrottes
nahezu der gleiche. Auch der weitere Verlauf der Sauerstoffkonzentrationen während und nach dem Frischabschnitt zeigt keine augenfälligen Unterschiede. Eine
Überdesoxidation des Metallbades kann nicht stattfinden,
solange ein ausreichendes Angebot an gelöstem und ungelöstem Kohlenstoff im Einsatz vorhanden ist. Dieses
Kohlenstoffangebot liefert also einerseits den größten
Teil des Brennstoffes für das Verfahren, auf der anderen
Seite ist es ein Schutz vor Überdesoxidation und die
Voraussetzung für das Erreichen des gewünschten Kohlenstoffgehaltes der Einschmelzprobe.

Beim Einschmelzen unlegierter Stahlgüten wird somit erfindungsgemäß durch Sauerstoffzufuhr die Einschmelz- und
Frischperiode verkürzt.

Eine Schmelze aus hochlegiertem Schrott muß mit Sauerstoff gefrischt werden, um die notwendige weitgehende Entkohlung zu bewirken. Wirtschaftliches Umschmelzen hochlegierten Schrotts ist daher in einem basischen Lichtbogenofen ohne Zufuhr von Sauerstoff nicht möglich, da die Ausbringung von umgeschmolzenem hochlegiertem Stahl bei der Oxidation der Schmelze mittels in der Schlacke enthaltener Eisenoxide weitaus geringer ist.

Jene Legierungselemente des Stahlbades, welche unedler als das Eisen sind, sollen während des Frischens so weit als möglich vor Oxidation bewahrt werden. Eine Abscheidung des Phosphors ist aber bei höheren Gehalten an Chrom oder Mangan nicht möglich. Der Phosphorgehalt des Einsatzes darf somit den geforderten Phosphorgehalt des umgeschmolzenen Produktes nicht überschreiten.

Die Affinität des Kohlenstoffes zum Sauerstoff steigt mit steigender Temperatur des Bades, wohingegen die Sauerstoffaffinität der in eisenreichen Schmelzen oxidierbaren Legierungselemente mit steigender Badtemperatur abnimmt. Es ist daher anzustreben, die Temperatur des Bades möglichst rasch zu steigern. Da die Verbrennungswärme der Legierungselemente beim Sauerstofffrischen frei wird, ist das Sauerstoffangebot pro Zeiteinheit zu diesem Zweck möglichst hoch einzustellen, das Frischen muß jedoch sofort bei Erreichen des gewünschten Endkohlenstoffgehaltes abgebrochen werden.

Um das Legierungsausbringen aus dem Schrott weiter zu verbessern, wird nach dem Sauerstofffrischen legierter Stähle eine teilweise Reduktion der Schwermetalloxide in der Schlacke durch Aufstreuen von Reduktionsmittel vorgenommen. Bei höhergekohlten Stählen kann hierfür Koksgrus verwendet werden, während bei niedriggekohlten, weichen Stählen feingekörntes Ferrosilizium, Aluminium oder Silicochrom auf die Schlacke gestreut wird.

Beim Erschmelzen hochlegierter Stähle aus arteigenem Schrott ist somit die gezielte Anwendung von Sauerstoff von größter Bedeutung.

Nach dem erfindungsgemäßen Verfahren kann der Betriebszustand einer metallurgischen Anlage sehr gut gesteuert werden. Sauerstoff, ein plasmabildendes Gas oder notwendigenfalls Reduktionsmittel können jederzeit durch die Zuführungsrohre eingebracht werden.

Wird direktreduziertes Eisenerz (Eisenschwamm) eingeschmolzen, ist ein Auseinanderhalten von Einschmelz- und Frischzeit nicht möglich, da beide Vorgänge praktisch gleichzeitig ablaufen. Die Ursache für dieses Verhalten liegt im Restsauerstoffgehalt des Schwammes und im gleichzeitig im flüssigen Bad enthaltenen Kohlenstoff.

Die beiden Elemente sorgen durch ihre Umsetzung zu Kohlenmonoxid für eine dauernde Badbewegung. Zur Einhaltung optimaler Bedingungen müssen Sauerstoff- und Kohlenstoffgehalt richtig aufeinander abgestimmt werden. Sind beide Elemente nicht bereits im Eisenschwamm im richtigen Verhältnis enthalten, so muß eines von beiden dem flüssigen Bad zugeführt werden. Dies kann wieder durch die in den Hohlelektroden verschiebbaren Zuführungsrohre erfolgen.

Eisenschwamm kann kontinuierlich
- im flüssigen Bad oder
- in den Elektrodenkratern
eingeschmolzen werden. Besonders vorteilhaft ist die Kombination dieser Vorgangsweisen mit stufenlosem Übergang.

Wird zu Beginn des Einschmelzens ein kurzer Lichtbogen eingestellt, welchem Sauerstoff zugeführt wird, findet in kürzester Zeit Kraterbildung statt. In diese Krater kann eine Teilmenge des Eisenschwammes kontinuierlich durch die Zuführungsrohre eingebracht werden. Die Zuführrate wird so abgestimmt, daß erst mit Beendigung der Zugabe des Eisenschwammes ein die Ofenwand schützender Schrottmantel eingeschmolzen ist. Zu diesem Zeitpunkt wird dann mit stufenlosem Übergang entweder der restliche Eisenschwamm mit üblicher Zuführrate zugegeben oder aber Schrott nachchargiert.

Die Einstellung der Betriebsarten und das Chargieren von Zuschlagstoffen bzw. Eisenschwamm erfolgt nach dem erfindungsgemäßen Verfahren leicht und schnell.

Die Brennstabilität des Lichtbogens von Elektroöfen ist zwar durch die elektrischen Werte der Ofenanlage festgelegt, sie wird aber durch die betriebsmäßigen Schwankungen infolge Veränderungen des Widerstandes durch die Schrottverschiebungen während des Einschmelzens und die Änderungen der Ionisation des Lichtbogens beeinträchtigt, die durch die chemischen Vorgänge hervorgerufen wird. Diese ständigen Veränderungen bedingen eine Unstetigkeit des Lichtbogens. Dieses Verhalten des Lichtbogens ist insbesondere bei Öfen mit Vollelektroden zu beobachten. Lichtbögen, welche von Hohlelektroden ausgehen, sind wesentlich ruhiger und bleiben überdies annähernd senkrecht auf die Badoberfläche gerichtet. Der Lichtbogen hat das Bestreben, sich am inneren Rand der Hohlelektrode zu entzünden, wobei diese Bohrung weit genug sein muß, damit der Lichtbogen nicht auf den äußeren Teil der Elektrode überspringt.

Betreibt man die metallurgische Anlage erfindungsgemäß durch Verschieben der Mündung des Zuführungsrohres und gleichzeitiges Zuführen eines plasmabildenden Gases als Plasmaofen, so wird die Stabilität der Entladung durch Bildung eines extrem heißen Plasmas noch gesteigert.

0122910

Patentansprüche:

1. Verfahren zum Betrieb einer metallurgischen Anlage mit einem metallurgischen Gefäß, wie einem Schmelzofen oder Konverter, durch dessen Decke eine oder mehrere Hohlelektrode(n) (3a, 3b, 3c) geführt ist (sind), in deren Hohlraum ein Zuführungsrohr (4) heb- und senkbar beweglich ist, dadurch gekennzeichnet, daß wahlweise

   a) durch Zurückziehen der Rohrmündung hinter die Mündung der Hohlelektrode (3a, 3b, 3c) die Anlage als Lichtbogenofen zum Einschmelzen von Einsatz- bzw. Zuschlagstoffen betrieben wird;

   b) durch Verschieben der Mündung des Rohres (4a, 4b, 4c) bis zur oder geringfügig vor die Mündung der Hohlelektrode (3a, 3b, 3c) und gleichzeitiges Zuführen eines plasmaerzeugenden Gases die Anlage als Plasmaofen zum Schmelzen von Einsatz- oder Zuschlagstoffen unter erhöhter Energieeintragung betrieben wird, oder

   c) durch Verschieben der Mündung des Rohres (4a, 4b, 4c) über die Mündung der Hohlelektrode (3a, 3b, 3c) hinaus, gegebenenfalls bis zum Eintauchen in ein Bad (2) der niedergeschmolzenen Einsatzstoffe und Zufuhr von sauerstoffhältigem Gas bei unterbrochener Stromzufuhr die Anlage als Frischkonverter betrieben wird.

2. Verfahren nach Anspruch 1, dadurch gekennzeichnet, daß als Zuführungsrohr (4) eine selbstverzehrende Lanze aus feuerfest ummanteltem Stahlrohr (5,6,7) eingesetzt wird.

3. Verfahren nach den Ansprüchen 1 und 2, dadurch gekennzeichnet, daß durch wenigstens ein Zuführungsrohr (4) fallweise Kohlenstoffträger und/oder feinteilige Zuschlagstoffe eingebracht werden.

0122910

4. Verfahren nach den Ansprüchen 1 und 2, dadurch gekennzeichnet, daß beim Betrieb als Frischkonverter technisch reines Sauerstoffgas durch die Zuführungsrohre unter die Oberfläche des Bades der niedergeschmolzenen Einsatzstoffe eingeblasen wird.

0122910

FIG.1

FIG.2

FIG.3

Europäisches
Patentamt

**EUROPÄISCHER RECHERCHENBERICHT**

**0122910**
Nummer der Anmeldung

EP 84 89 0063

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | US-A-3 556 771 (BRUNNING et al.) * Figur 2; Spalte.3, Zeile 63 - Spalte 4, Zeile 27 * | 1,4 | C 21 C 5/52<br>C 21 C 5/46<br>H 05 B 7/08 |
| | --- | | |
| Y | US-A-3 316 082 (BARLOGA et al.) * Ansprüche; Figur * | 1,4 | |
| A | | 2,3 | |
| | --- | | |
| A | US-A-3 730 961 (BRYCE) | | |
| | --- | | |
| A,D | US-A-3 292 662 (SUNAO NISHI) | | |
| | --- | | |
| A,D | AT-A- 232 020 (VOEST) | | RECHERCHIERTE SACHGEBIETE (Int. Cl. 3) |
| | --- | | |
| Y,P | GB-A-2 112 509 (VOEST-ALPINE AG) * Abbildung; Zusammenfassung * | 1 | C 21 C<br>H 05 B<br>F 27 B |
| | ----- | | |

Der vorliegende Recherchenbericht wurde für alle Patentansprüche erstellt.

| Recherchenort | Abschlußdatum der Recherche | Prüfer |
|---|---|---|
| DEN HAAG | 05-07-1984 | OBERWALLENEY R.P.L.I |

EPA Form 1503 03.82